# EUROPÄISCHE PATENTANMELDUNG

(11) **EP 1 795 511 A1**
(43) Veröffentlichungstag der Anmeldung: **13.06.2007**
(21) Anmeldenummer: 05111850.3
(22) Anmeldetag: 08.12.2005
(51) Int. Cl.: C04B 28/02, C04B 40/00

(54) **Zusammensetzung und deren Verwendung zur Verbesserung der Verarbeitbarkeit von hydraulisch abbindenden Zusammensetzungen**

(71) Anmelder: Sika Technology AG, 6340 Baar (CH)
(72) Erfinder: Wombacher, Franz, 8917 Oberlunkhofen (CH); Mäder, Urs, 8500 Frauenfeld (CH)
(74) Vertreter: Isler, Jörg

(57) **Zusammenfassung**

Die Erfindung betrifft eine Zusammensetzung umfassend mindestens einen Verflüssiger für eine hydraulisch abbindende Zusammensetzung und mindestens ein Polyalkylenglykol, sowie deren Verwendung zur Verbesserung der Verarbeitbarkeit, vorzugsweise zur Verlängerung der Verarbeitungszeit, von hydraulisch abbindenden Zusammensetzungen.

## Beschreibung

### Technisches Gebiet

Die Erfindung betrifft das Gebiet der Betontechnologie. Die Erfindung betrifft eine Zusammensetzung umfassend mindestens einen Verflüssiger für eine hydraulisch abbindende Zusammensetzung und mindestens ein Polyalkylenglykol, sowie deren Verwendung zur Verbesserung der Verarbeitbarkeit, vorzugsweise zur Verlängerung der Verarbeitungszeit, von hydraulisch abbindenden Zusammensetzungen.

### Stand der Technik

Die Herstellung von Beton ist ein sehr komplexer Prozess. Beton wird hergestellt aus Zement, aus Betonzuschlagsstoffen, wie z.B. Kies oder Sand, und aus Wasser. Zement ist bekanntermassen sehr empfindlich gegenüber Wasser, unabhängig davon, ob es in flüssigem oder gasförmigem Zustand vorliegt, denn Zement bindet hydraulisch ab, das heisst, er erhärtet unter dem Einfluss von Wasser innert kurzer Zeit zu einem sehr stabilen Festkörper.

Bei der Weiterverarbeitung zu Beton wird der Werkstoff Zement mit Zuschlagstoffen und chemischen Zusatzmitteln vermengt. Beispielswiese wird der Zement zusammen mit Wasser, Gestein und weiteren Additiven in einem Rührwerk gemischt. Durch die Zugabe der flüssigen oder pulverförmigen Zusatzmittel sollen die Eigenschaften des Betons in chemischer und/oder physikalischer Hinsicht verbessert werden. So können die Zusatzmittel beispielsweise die Fliesseigenschaft, die Viskosität, das Verdichtungsverhalten und das Abbindeverhalten des Betons beeinflussen.

Der Einsatz von sogenannten Beton-Verflüssigern ist seit langem bekannt. Beispielsweise ist aus EP 1 138 697 B1 oder EP 1 061 089 B1 bekannt, dass (Meth)acrylat-Polymere mit Ester- und gegebenenfalls Amid-Seitenketten als Beton-Verflüssiger geeignet sind. Hierbei wird dieser Beton-Verflüssiger dem Zement als Zusatzmittel zugegeben oder dem Zement vor dem Mahlen zugesetzt, und führt zu einer starken Verflüssigung, beziehungsweise Reduktion des Wasserbedarfs, des daraus hergestellten Betons oder Mörtels und somit zur verbesserten Verarbeitbarkeit.

Bei hohen Temperaturen oder auch beim Transportieren von Beton besteht die Gefahr, dass der Beton zu schnell aushärtet und zur Verarbeitung nicht mehr geeignet ist. Um die Verarbeitbarkeit des Betons zu verlängern, werden Verzögerer eingesetzt. Die bekannten Verzögerer haben jedoch den Nachteil, dass sie gleichzeitig auch die Zeit bis zum Abbindebeginn verzögern. Dies ist besonders in den Fällen von Nachteil, bei denen nach der Verarbeitung ein schnelles Erstarren erwünscht ist.

### Darstellung der Erfindung

Aufgabe der vorliegenden Erfindung ist es daher, eine Zusammensetzung und die Verwendung einer solchen Zusammensetzung für die Verlängerung der Verarbeitungszeit von hydraulisch abbindenden Zusammensetzungen bereitzustellen, welche die Nachteile des Standes der Technik nicht aufweist und welche die Abbindezeiten nicht verlängert. Diese Aufgabe wird durch eine Zusammensetzung und eine Verwendung gemäss den unabhängigen Ansprüchen gelöst.

Überraschenderweise wurde gefunden, dass eine Zusammensetzung enthaltend mindestens ein substituiertes oder unsubstituiertes Polyalkylenglykol gemäss Formel (I), und mindestens einen Verflüssiger für eine hydraulisch abbindende Zusammensetzung enthaltend mindestens ein Polymer **A** gemäss Formel (II) hervorragend geeignet ist, um die Verarbeitungszeit von hydraulisch abbindenden Zusammensetzungen zu verlängern und das Fliessverhalten zu verbessern. Insbesondere wurde überraschenderweise gefunden, dass durch die Kombination der Polymere **A** gemäss Formel (II) mit mindestens einem Polyalkylenglykol gemäss Formel (I) die Nachteile der bekannten Verzögerer aufgehoben werden können und die Abbindezeit nicht verlängert wird, und dass zusätzlich die vorteilhaften Wirkungen des Polymers **A** noch verbessert werden.

### Wege zur Ausführung der Erfindung

Die vorliegende Erfindung betrifft eine Zusammensetzung und deren Verwendung zur Verlängerung der Verarbeitungszeit. Die erfindungsgemässe Zusammensetzung umfasst oder besteht aus mindestens einem substituierten oder unsubstituierten Polyalkylenglykol der Formel (I), und mindestens einem Verflüssiger für eine hydraulisch abbindende Zusammensetzung umfassend oder bestehend aus mindestens einem Polymer **A** der Formel (II).

Die Formel (I) des substituierten oder unsubstituierten Polyaklylenglykols lautet:

R¹¹-O-(R¹²-O)ₓ-(R¹³-O)_{y}-R¹⁴ (I)

wobei
R¹¹ = H oder C1- bis C20 -Alkyl,
R¹² = C2- bis C4-Alkylen,
R¹³ = C2- bis C4-Alkylen,
R¹⁴ = H oder C1- bis C20 -Alkyl,
x = 0-500, und
y = 0-500 ist,
und wobei x+y > 20 und das Molgewicht M_{w} des Polyalkylenglykols der Formel (I) 1'000 bis 50'000 g/mol ist.

In einer bevorzugten Ausführungsform ist R¹² = R¹³.

In einer weiteren bevorzugten Ausführungsform stehen R¹¹ und R¹⁴ unabhängig voneinander für ein H oder ein Methyl oder Butyl, vorzugsweise ein H, R¹² und R¹³ für Ethylen oder Propylen, vorzugsweise für Ethylen, wobei vorzugsweise R¹² = R¹³ ist. R¹² und R¹³ können auch unterschiedlich sein voneinander und können als Blockcopolymere vorliegen oder zufällig angeordnet sein.

In einer besonders bevorzugten Ausführungsform ist das Polyalkylenglykol der Formel (I) ein Polyethylenglykol (PEG), Methoxypolyethylenglykol (MPEG) oder ein Polypropylenglykol (PPG). Besonders bevorzugt ist das Polyethylenglykol (PEG) oder das Methoxypolyethylenglykol (MPEG).

Auch Mischungen von zwei oder mehreren Polyalkylenglykolen der Formel (I) kommen in Frage, insbesondere Mischungen von Polyethylenglykol (PEG) und Methoxypolyethylenglykol (MPEG), oder Mischungen von Polyethylenglykolen (PEGs) mit unterschiedlichem Molgewicht M_{w} oder Mischungen von Methoxypolyethylenglykolen (MPEGs) mit unterschiedlichem Molgewicht M_{w}

Typischerweise beträgt das Molgewicht M_{w} des Polyalkylenglykols 2'000 bis 20'000 g/mol, bevorzugt 3'000 bis 10'000 g/mol, noch mehr bevorzugt 4'000 bis 6'000 g/mol.

Unter ,Molekulargewicht' oder 'Molgewicht' versteht man im Sinne der Erfindung das Molekulargewichtsmittel M_{w}.

Als Verflüssiger kommen diejenigen in Frage, welche geeignet sind, eine hydraulisch abbindende Zusammensetzung zu verflüssigen oder deren Wasserbedarf zu reduzieren. Unter 'Verflüssiger' versteht man im Sinne der Erfindung auch einen Superverflüssiger, der vielfach auch als Fliessmittel bezeichnet wird.

Der Verflüssiger der vorliegenden Erfindung enthält oder besteht aus mindestens einem Polycarboxylatether (PCE). Vorzugsweise enthält oder besteht der Verflüssiger aus mindestens einem Polymer A der Formel (II).

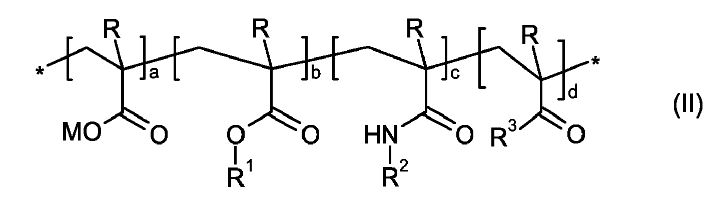

Hierbei stellen M unabhängig voneinander H⁺, Alkalimetallion, Erdalkalimetallion, zwei- oder dreiwertiges Metallion, Ammoniumion, oder organische Ammoniumgruppe dar. Der Term "unabhängig voneinander" bedeutet hier und im Folgenden jeweils, dass ein Substituent unterschiedliche zur Verfügung stehenden Bedeutungen in demselben Molekül aufweisen kann. So kann beispielsweise im Polymer **A** der Formel (II) gleichzeitig Carbonsäuregruppen und Natriumcarboxylatgruppen aufweisen, das heisst, dass für R₁ in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stellen die Substituenten R unabhängig voneinander Wasserstoff oder Methyl dar. Das heisst es handelt sich beim Polymeren **A** um ein substituiertes Poly(acrylat), Poly(methacrylat) oder um ein Poly((meth)-acrylat).

Des Weiteren stellen die Substituenten R¹ und R² unabhängig voneinander C₁- bis C₂₀-Alkyl, Cycloalkyl, Alkylaryl oder -[AO]ₙ-R⁴ dar. Hierbei stellt A eine C₂- bis C₄-Alkylengruppe dar und R⁴ eine C₁- bis C₂₀ -Alkyl-, Cyclohexyl- oder Alkylarylgruppe dar, während n einen Wert von 2 bis 250, insbesondere von 8 bis 200, besonders bevorzugt von 11 bis 150, darstellt.

Der Substituent R³ stellt des Weiteren -NH₂, -NR⁵R⁶, oder -OR⁷NR⁸R⁹ dar. Hierbei stehen R⁵ und R⁶ unabhängig voneinander für H oder für eine C₁- bis C₂₀- Alkyl-, Cycloalkyl- oder Alkylaryl- oder Arylgruppe oder eine Hydroxyalkylgruppe oder eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) oder R⁵ und R⁶ bilden zusammen einen Ring, von dem der Stickstoff des -NR⁵R⁶ ein Teil ist, um einen Morpholin- oder Imidazolinring aufzubauen. Weiterhin stellen hierbei die Substituenten R⁸ und R⁹ unabhängig voneinander eine C₁- bis C₂₀- Alkyl-, Cycloalkyl-, Alkylaryl-, Aryl- oder eine Hydroxyalkylgruppe und R⁷ eine lineare oder verzweigte C₂-C₄-Alkylengruppe, insbesondere Isomere der C₂-C₄- Alkylene, vorzugsweise ein Ethylen, Propylen, Isopropylen oder -C(CH₃)₂-CH₂- dar.

Schliesslich stellen die Indizes a, b, c und d Molverhältnisse dieser Strukturelemente im Polymer **A** der Formel (II) dar. Diese Strukturelemente stehen in einem Verhältnis von
a/b/c/d = (0.05 - 0.9) / (0.05 - 0.9) / (0- 0.8) / (0 - 0.5),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06),
zueinander, während die Summe a + b + c + d = 1 ist. Die Summe c + d ist bevorzugt grösser als 0, vorzugsweise zwischen 0.0001 und 0.8, noch mehr bevorzugt zwischen 0.0001 und 0.1, am meisten bevorzugt zwischen 0.001 und 0.02.

Typischerweise beträgt der Anteil des Polymeren **A** der Formel (II) 10 bis 100 Gewichts-%, insbesondere 25 bis 50 Gew.-%, bezogen auf das Gewicht des Verflüssigers.

Die Herstellung des Polymeren **A** kann durch radikalische Polymerisation der jeweiligen Monomere 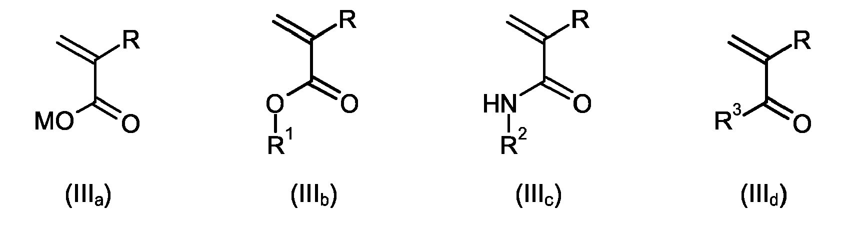 oder durch eine sogenannte polymer-analoge Umsetzung eine Polycarbonsäure der Formel (IV) erfolgen

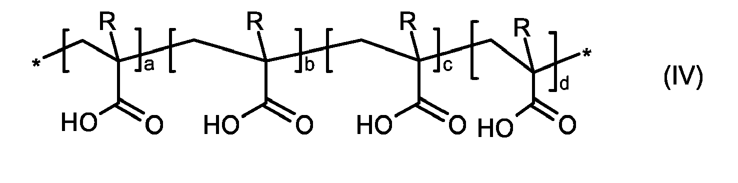

In der polymer-analogen Umsetzung wird die Polycarbonsäure mit den korrespondierenden Alkoholen, Aminen verestert oder amidiert. Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Variante davon, wie sie in EP 1 348 729 A1 auf Seite 3 bis Seite 5 sowie in dessen Beispielen beschrieben sind, kann das Polymer **A** in festem Aggregatszustand hergestellt werden.

Es hat sich erwiesen, dass eine besonders bevorzugte Ausführungsform des Polymeren diejenigen sind, in welchen c+d > 0, insbesondere d > 0, sind. Als Rest R³ hat sich insbesondere -NH-CH₂-CH₂-OH als besonderes vorteilhaft erwiesen. Derartige Polymere **A** weisen ein chemisch gebundenes Ethanolamin auf, welches abgespalten werden kann. Das Ethanolamin stellt einen äusserst effizienten Korrosionsinhibitor dar. Durch die chemische Anbindung des Korrosionsinhibitors ist der Geruch stark reduziert im Vergleich dazu, wo dieser lediglich beigemischt ist. Weiterhin konnte festgestellt werden, dass derartige Polymere **A** auch bedeutend stärkere Verflüssigereigenschaften aufweisen.

Die erfindungsgemässe Zusammensetzung ist vorzugsweise eine Lösung, eine Dispersion oder ein Pulver. In einer weiteren Ausführungsform kann die erfindungsgemässe Zusammensetzung weitere Zusatzstoffe, vorzugsweise ein organisches Lösungsmittel oder Wasser, enthalten. Vorzugsweise ist die erfindungsgemässe Zusammensetzung eine wässrige Dispersion oder eine Lösung, insbesondere eine wässrige Lösung.

Als organische Lösungsmittel sind besonders geeignet Alkohole, vorzugsweise Methanol, Ethanol, Propanol, Isopropanol, Butanol, höhere Alkohole, wie Ethylenglykol, Glycerin, Polyetherpolyole wie Polyethylenglykole und Etheralkohole, wie Butylglykol, Methoxypropanol, und Alkylpolyethylenglykole, aber auch Aldehyde, Ester, Ether, Amide oder Ketone, insbesondere Aceton, Methylethylketon, Kohlenwasserstoffe, insbesondere Methylester, Ethylester, Isopropylester, Heptan, Cyclohexan, Xylol, Toluol, White Spirit sowie deren Mischungen. Als bevorzugt gelten Ethylacetat, Ethanol, Isopropanol oder Heptan, sowie Mischungen davon.

Insbesondere bevorzugt ist Wasser als weiteren Zusatzstoff. Weiterhin bevorzugt sind Gemische von Wasser mit Alkoholen mit einem Wasseranteil von mehr als 50 Gew.-%, bevorzugt mehr als 65 Gew.-%, insbesondere mehr als 80 Gew.-%, bezogen auf das Gesamtgewicht von Wasser und organischem Lösungsmittel.

Beispiele für weitere Zusatzstoffe sind Additive, wie sie in der Betontechnologie geläufig sind, insbesondere oberflächenaktive Stoffe, Stabilisatoren gegen Hitze und Licht, Trennmittel, Chromatreduzierer, Farbstoffe, Entschäumer, Beschleuniger, Verzögerer, weitere Korrosionsinhibitoren, lufteinführende oder entlüftende Substanzen, Porenbildner, Pumphilfsmittel, Viskositätsregler, Hydrophobiermittel oder Thixothropiermittel, Schwindreduzierer.

Der Anteil des Polyalkylenglykols beträgt typischerweise 1 bis 70 Gew.-%, vorzugsweise 10 bis 50 Gew.-%, besonders bevorzugt 15 bis 40 Gew.-%, bezogen auf das Trocken-Gesamtgewicht der Zusammensetzung. Unter Trocken-Gesamtgewicht wird das Gewicht der Zusammensetzung ohne Wasser oder Lösungsmittel verstanden.

Der Anteil des Verflüssigers beträgt typischerweise 30 bis 99 Gew.-%, bevorzugt 50 bis 95 Gew.-%, noch mehr bevorzugt 60 bis 85 Gew.-%, bezogen auf das Trocken-Gesamtgewicht der Zusammensetzung.

Bevorzugt ist auch eine pulverförmige erfindungsgemässe Zusammensetzung ohne Wasser oder organischem Lösungsmittel.

In einem weiteren Aspekt betrifft die vorliegende Erfindung eine hydraulisch abbindende Zusammensetzung, welche die erfindungsgemässe Zusammensetzung sowie weiterhin mindestens ein hydraulisch abbindendes Bindemittel enthält oder daraus besteht. Das hydraulisch abbindende Bindemittel ist vorzugsweise ein mineralisches Bindemittel wie beispielsweise Zement, Gips, Flugasche, Silica fume, Schlacke, Hüttensande, Kalksteinfiller, oder gebrannter Kalk. Bevorzugte hydraulische Bindemittel umfassen mindestens einen Zement, insbesondere mindestens einen Zement gemäss Euronorm EN 197 oder Calciumsulfat, in Form von Anhydrit, Halbhydrat- oder Dihydratgips; oder Calciumhydroxid. Bevorzugt sind Portlandzemente, Sulfoaluminatzemente und Tonerdeschmelzzemente, insbesondere Portlandzement. Mischungen von Zementen können zu besonders guten Eigenschaften führen. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten. Als Bestandteil des hydraulischen Bindemittels wird Zement, insbesondere Portlandzement, bevorzugt. Besonders bevorzugt wird ein chromatarmer Zement. Die hydraulisch abbindende Zusammensetzung ist vorzugsweise Beton.

Die erfindungsgemässe Zusammensetzung wird vorzugsweise dem hydraulisch abbindenden Bindemittel so zudosiert, dass der Anteil der erfindungsgemässen Zusammensetzung 0.05 bis 3 Gew.-%, vorzugsweise 0.1 bis 1.5 Gew.-%, besonders bevorzugt 0.2 bis 1 Gew.-%, bezogen auf das Gewicht des hydraulisch abbindenden Bindemittels beträgt.

Die Herstellung der erfindungsgemässen Zusammensetzung erfolgt durch Vermischen des Polyalkylenglykols der Formel (I) mit mindestens einem Verflüssiger umfassend oder bestehend aus mindestens einem Polymer **A** der Formel (II), wobei die Reihenfolge, ob zuerst das Polyalkylenglykol oder zuerst der Verflüssiger vorliegt, keine Rolle spielt. Die Herstellung einer wässrigen Zusammensetzung erfolgt durch Zusetzen von Wasser bei der Herstellung des Verflüssigers, insbesondere bei der Herstellung des Polymers **A** der Formel (I), oder durch nachträgliches Vermengen des Verflüssigers und des Polyalkylenglykols mit Wasser. Die erfindungsgemässe Zusammensetzung kann als Pulver, klare oder opake Lösung oder als Dispersion, das heisst als Emulsion oder Suspension, vorliegen.

Für die Verarbeitung der trockenen hydraulisch abbindenden Zusammensetzung wird eine benötigte Menge Wasser zugegeben und die Mischung verarbeitet. Die Menge des benötigten Wassers richtet sich in erster Linie nach dem vom Fachmann üblich verwendeten Wasser/Zement-Verhältnis (w/z-Wert). Der Verflüssiger oder das Polyalkylenglykol können gleichzeitig oder nacheinander in beliebiger Reihenfolge der hydraulisch abbindenden Zusammensetzung, vorzugsweise der Betontrockenmischung vor Zugabe das Anmachwassers, gleichzeitig mit dem Anmachwasser, oder nach Zugabe des Anmachwassers, zugegeben werden, oder es kann zuerst der Verflüssiger und das Anmachwasser und danach das Polyalkylenglykol zur hydraulisch abbindenden Zusammensetzung gegeben werden. Nach dem Kontakt mit Wasser härtet die hydraulisch abbindenden Zusammensetzung aus.

In einem weiteren Aspekt betrifft die vorliegende Erfindung daher eine mit Wasser ausgehärtete hydraulische Zusammensetzung, vorzugsweise Beton, welche die erfindungsgemässe Zusammensetzung umfasst.

In einem weiteren Aspekt betrifft die vorliegende Erfindung die Verwendung der erfindungsgemässen Zusammensetzung zur Verlängerung der Verarbeitungszeit und zur Verbesserung der Fliesseigenschaften von hydraulisch abbindenden Zusammensetzungen verglichen mit hydraulisch abbindenden Zusammensetzungen umfassend herkömmliche Verflüssiger. Insbesondere wird die Abbindezeit der hydraulisch abbindenden Zusammensetzungen umfassend eine erfindungsgemässe Zusammensetzung nicht verlängert verglichen mit hydraulisch abbindenden Zusammensetzungen umfassend herkömmliche Verzögerer.

Mit "Verarbeitungszeit" oder "Zeit der Verarbeitbarkeit" wird die Zeit bezeichnet, während der eine hydraulisch abbindende Zusammensetzung, vorzugsweise Frischbeton, verarbeitbar ist. Mit "Verarbeitbarkeit" wird das Verhalten der hydraulisch abbindenden Zusammensetzung, vorzugsweise des Frischbetons, beim Mischen, Transportieren, Fördern und Einbringen an der Einbaustelle sowie nachfolgend beim Verdichten und Bearbeiten der Oberfläche bezeichnet. Die Verarbeitbarkeit kann mit der Konsistenz in Zahlen messbar beschrieben werden. Beispielsweise kann die Konsistenz durch Prüfung des Setzmasses, des Verdichtungsmasses, des Ausbreitmasses oder des Lufporengehaltes bestimmt werden. Beim Frischbeton werden vorzugsweise Prüfmethoden nach der Norm EN 12350 durchgeführt.

In einer bevorzugten Ausführungsform wird die Verarbeitungszeit um mehr als 10%, bevorzugt um 20 bis 70%, noch mehr bevorzugt um 25 bis 50% verlängert, verglichen mit der entsprechenden Verarbeitungszeit von üblichen hydraulisch abbindenden Zusammensetzungen umfassend einen herkömmlichen Verflüssiger ohne ein Polyalkylenglykol der Formel (I).

Ein weiterer Gegenstand der vorliegenden Erfindung ist eine Betonkonstruktion, welche mindestens eine erfindungsgemässe Zusammensetzung umfasst. Die Betonkonstruktion ist vorteilhaft ein Bauwerk des Hoch- oder Tiefbaus, insbesondere ein Gebäude oder Tunnel, eine Strasse oder eine Brücke.

Die vorliegende erfindungsgemässe Zusammensetzung hat den Vorteil, dass sie gleichzeitig als Verflüssiger und als Verarbeitbarkeitsverlängerer für eine hydraulisch abbindende Zusammensetzung wirkt. Die Wirkung des Verflüssigers wird durch Zugabe des Polyalkylenglykols sogar noch zusätzlich verbessert. Dies ist äusserst überraschend, weil das Polyalkylenglykol allein in einer hydraulisch abbindenden Zusammensetzung keine verflüssigende Wirkung aufweist.

### Beispiele

Die Erfindung wird nun anhand von Beispielen näher erläutert.

### 1.1 Verwendete Rohstoffe

**Tabelle 1: Eingesetzte Rohstoffe.**

| Abkürzung | Hersteller | Bedeutung | Mw* |
|---|---|---|---|
| PEG200 | Fluka, Schweiz | Polyethylenglykol 200 | 200 g/mol |
| PEG5000 | Fluka, Schweiz | Polyethylenglykol 5000 | 5000 g/mol |
| PEG6000 | Fluka, Schweiz | Polyethylenglykol 6000 | 6000 g/mol |
| PEG20000 | Fluka, Schweiz | Polyethylenglykol 20000 | 20000 g/mol |
| MPEG3000 | Fluka, Schweiz | Methoxypolyethylen-glykol 3000 | 3000 g/mol |
| MPEG5000 | Fluka, Schweiz | Methoxypolyethylen-glykol 5000 | 5000 g/mol |
| PPG2000 | Fluka, Schweiz | Polypropylenglykol 2000 | 2000 g/mol |
| Jeffamin® D400 | Huntsman | O,O'-Bis-(2-aminopropyl)-PPG300 | 400 g/mol |
| Natriumgluconat | Fluka, Schweiz | D-Gluconsäure Natriumsalz | |

| | | | |
|---|---|---|---|
| *Mw = mittleres Molekulargewicht | | | |

### 1.2 Verwendete Polymere A

**Tabelle 2 Verwendete Abkürzungen.**

| Abkürzung | Bedeutung | Mw* |
|---|---|---|
| PEG1000 | Polyethylenglykol ohne terminale OH-Gruppen | 1000 g/mol |
| PEG3000 | Polyethylenglykol ohne terminale OH-Gruppen | 3000 g/mol |
| EO/PO(50/50)2000 | Block-Copolymer aus Ethylenoxid und Propylen-oxid im Verhältnis 50:50 ohne terminale OH-Gruppen | 2000 g/mol |

| | | |
|---|---|---|
| *Mw = mittleres Molekulargewicht | | |

Es wurden die in Tabelle 3 angegebenen Polymere **A** mittels polymer analoger Umsetzung aus Poly(meth)acrylsäure mit den korrespondierenden Alkoholen und Aminen nach bekannter Art und Weise hergestellt. Das Polymer ***A-1*** liegt durch NaOH teil neutralisiert vor. (M = H⁺, Na⁺).

Die Polymere **A** werden in diesen Beispielen als wässrige Lösung eingesetzt. Der Gehalt an Polymer ***(A-1, A-2,*** und ***A-3*)** ist 40 Gew.-%. Diese wässrigen Lösungen werden als ***A-1L, A-2L*** und ***A-3L*** bezeichnet. Die in den folgenden Tabellen angegebenen Konzentrationen für **A** beziehen sich jeweils auf den Gehalt an Polymer **A**.

**Tabelle 3 Polymer A entspricht der Formel (II)**

| | ***A-1*** | | ***A-2*** | | ***A-3*** |
|---|---|---|---|---|---|
| R = | H | | CH₃ | | CH₃ |
| R¹ = | -PEG1000-OCH₃ : | 57.2: | -PEG1000-OCH₃ : | 45.5: | -PEG1000-OCH₃ |
| | -PEG3000-OCH₃ | 42.8^{†} | -PEG3000-OCH₃ | 54.5^{†} | |
| R² = | EO/PO(50/50)2000-OCH₃ | | EO/PO(50/50)2000-OCH₃ | | EO/PO(50/50)2000-OCH₃ |
| R³ = | | | | | |
| a/b/c/d = | 0.640/0.358/0.002/0.000 | | 0.745/0.253/0.002/0.000 | | 0.638/0.360/0.002/0.000 |
| Mw | 72'000 | | 60'000 | | 35'000 |

| | | | | | |
|---|---|---|---|---|---|
| mit M= H⁺, Na⁺. ^{†}Molverhältnis | | | | | |

### 2.1 Fliessverhalten von Mörtel

Es wurde ein Mörtel mit einer Korngrösse von 0-8 mm, mit ca. 320 kg/m³ Portlandzement CEM I 42.5, und einem w/z-Wert von 0.4 hergestellt. Bei der Zugabe des Anmachwassers wurden gleichzeitig 0.32 % der in Tabelle 4 angegebenen Polymere **A** sowie ein Polyalkylenglykol in der in Tabelle 4 angegebenen Menge dazugegeben. Die Prozentangaben beziehen sich jeweils auf das Trockengewicht der Polymere **A** bzw. der Polyalkylenglykole bezogen auf den Zement. Die Polymere **A** sowie die Polyalkylenglykole wurden vor der Zugabe in Wasser gelöst und, falls nichts anderes angegeben, als 40%-ige Lösung mit dem Anmachwasser zur Mörteltrockenmischung gegeben.

Zur Untersuchung des Fliessverhaltens wurde das Ausbreitmass (ABM) in Millimeter sowohl nach DIN 18555 mit Schlägen (mS), als auch ohne Schläge (oS) nur nach Abziehen des Konus, zu verschiedenen Zeiten gemessen. Zusätzlich wurde der Luftporengehalt (Luft) nach EN 196 bestimmt.

**Tabelle 4: Ausbreitmass (ABM) in mm; min = Minuten, n.d. = nicht gemessen; oS = ohne Schläge; mS = mit Schlägen; Luft = Luftporengehalt; * = 30%-ige Lösung**

| Nr | Polymer **A** | Polyalkylen-glykol | ABM 0min | | ABM 30min | | ABM 40min | | ABM 60min | | Luft 0min |
|---|---|---|---|---|---|---|---|---|---|---|---|
| | | | oS | mS | oS | mS | oS | mS | oS | mS | |
| 1 | ***A-1*** | - | 175 | 220 | 129 | 180 | 115 | 170 | 100 | 139 | 2.3 |
| 2 | ***A-1*** | 0.03 % PEG200 | 180 | 223 | 125 | 175 | n.d. | n.d. | 102 | 132 | 3.2 |
| 3 | ***A-1*** | 0.16 % PEG200 | 182 | 230 | 119 | 166 | n.d. | n.d. | 100 | 125 | 2.6 |
| 4 | ***A-1*** | 0.25 % PEG200 | 168 | 220 | 117 | 170 | n.d. | n.d. | 100 | 130 | 2.8 |
| 5 | ***A-1*** | 0.03 % MPEG3000 | 172 | 225 | 130 | 178 | n.d. | n.d. | 105 | 140 | 4.3 |
| 6 | ***A-1*** | 0.16 % MPEG3000 | 177 | 229 | 147 | 188 | n.d. | n.d. | 110 | 155 | 3.3 |
| 7 | ***A-1*** | 0.25 % MPEG3000 | 182 | 230 | 154 | 195 | n.d. | n.d. | 110 | 159 | 3.1 |
| 8 | ***A-1*** | 0.03 % MPEG5000 | 177 | 228 | 148 | 190 | n.d. | n.d. | 110 | 155 | 2.8 |
| 9 | ***A-1*** | 0.16 % MPEG5000 | 180 | 225 | 155 | 195 | n.d. | n.d. | 110 | 160 | 2.8 |
| 10 | ***A-1*** | 0.2 % MPEG 5000 | 180 | 225 | n.d. | n.d. | 160 | 200 | 110 | 170 | n.d. |
| 11 | ***A-1*** | 0.25 % MPEG5000 | 180 | 230 | 160 | 205 | n.d. | n.d. | 110 | 167 | 2.8 |
| 12 | ***A-1*** | 0.03 % Jeffamin®D400 | 172 | 228 | 128 | 178 | n.d. | n.d. | 110 | 140 | 2.5 |
| 13 | ***A-1*** | 0.16 % Jeffamin®D400 | 177 | 224 | 137 | 184 | n.d. | n.d. | 105 | 147 | 2.5 |
| 14 | ***A-1*** | 0.25 % Jeffamin®D400 | 180 | 226 | 145 | 190 | n.d. | n.d. | 108 | 151 | 2.8 |
| 15 | ***A-1*** | 0.03 % PPG2000 | 180 | 235 | 131 | 183 | n.d. | n.d. | 107 | 147 | 1.5 |
| 16 | ***A-1*** | 0.16 % PPG2000 | 182 | 235 | 137 | 185 | n.d. | n.d. | 107 | 151 | 1.6 |
| 17 | ***A-1*** | 0.25 % PPG2000 | 191 | 238 | 142 | 187 | n.d. | n.d. | 104 | 155 | 1.3 |
| 18 | ***A-1*** | 0.03 % PEG5000 | 177 | 228 | 148 | 189 | n.d. | n.d. | 110 | 153 | 2.7 |
| 19 | ***A-1*** | 0.16 % PEG5000 | 181 | 225 | 158 | 197 | n.d. | n.d. | 110 | 160 | 2.8 |
| 20 | ***A-1*** | 0.25 % PEG5000 | 183 | 227 | 163 | 200 | n.d. | n.d. | 111 | 170 | 3 |
| 21 | ***A-1*** | 0.2 % PEG6000 | 180 | 225 | n.d. | n.d. | 140 | 200 | 105 | 165 | n.d. |
| 22 | ***A-1*** | 0.03 % PEG20000 | 177 | 228 | 139 | 191 | n.d. | n.d. | 113 | 155 | 2.7 |
| 23 | ***A-1*** | 0.16 % PEG20000 | 184 | 225 | 151 | 199 | n.d. | n.d. | 110 | 165 | 2.8 |
| 24 | ***A-1*** | 0.25 % PEG20000 | 173 | 220 | 143 | 183 | n.d. | n.d. | 111 | 155 | 3 |
| 25 | ***A-2*** | 0.15 % PEG20000* | 200 | n.d. | n.d. | n.d. | 178 | n.d. | 160 | n.d. | n.d. |

Aus Tabelle 4 ist ersichtlich, dass die Verarbeitbarkeit des Mörtels, welcher ein erfindungsgemässes Polyalkylenglykol enthält, auch nach 60 Minuten noch sehr gut ist. Der Mörtel wird als gut verarbeitbar erachtet, wenn die Werte des Ausbreitmasses über 130 mm betragen bei den Versuchen mit Schlägen (mS). Wird als Polyalkylenglykol das PEG200 mit einem M_{w} von 200 g/mol genommen, ist der Mörtel nach 60 Minuten nicht mehr gut verarbeitbar. Dagegen werden hervorragende Ergebnisse erzielt mit PEG5000 und MPEG5000.

### 2.2 Fliessverhalten von Beton

Es wurde ein Beton mit einer Korngrösse von 0-32 mm, mit ca. 320 kg/m³ Portlandzement CEM I 42.5, und einem w/z-Wert von 0.43 hergestellt. Bei der Zugabe des Anmachwassers wurden gleichzeitig ein Polymer **A** sowie ein Polyalkylenglykol in der in Tabelle 5 und 6 angegebenen Menge dazugegeben. Die Prozentangaben beziehen sich jeweils auf das Trockengewicht der Polymere **A** bzw. der Polyalkylenglykole bezogen auf den Zement. Die Polymere **A** sowie die Polyalkylenglykole wurden vor der Zugabe in Wasser gelöst und als 40%-ige Lösung mit dem Anmachwasser zur Betonmischung gegeben.

Zur Untersuchung des Fliessverhaltens wurde das Ausbreitmass (ABM) in Zentimeter nach EN 12350 zu verschiedenen Zeiten gemessen. Zusätzlich wurde der Luftporengehalt (Luft) nach EN 12350 und die Druckfestigkeit nach EN 12390 bestimmt (siehe Tabelle 5 und 6).

**Tabelle 5: Ausbreitmass (ABM) in cm; min = Minuten; Luft = Luftporengehalt in %; d = Tag**

| Nr | Polymer **A** | Polyalkylen-glykol | ABM 0min | ABM 30min | ABM 60min | Luft 0min | Druckfestigkeit [N/mm²] nach 1d | |
|---|---|---|---|---|---|---|---|---|
| | | | | | | | bei 10°C | bei 20°C |
| 26 | 0.16 % ***A-1*** | - | 55 | 42 | 33 | 1.3 | 18.4 | 27.7 |
| 27 | 0.16 % ***A-1*** | 0.048% MPEG5000 | 51 | 49 | 41 | 1.3 | 17 | 27.3 |

Aus Tabelle 5 ist ersichtlich, dass die Verarbeitbarkeit des Betons, welcher ein erfindungsgemässes Polyalkylenglykol enthält, auch nach 60 Minuten noch sehr gut ist, verglichen mit dem Beton, welcher nur einen Verflüssiger enthält. Die Grenze der Verarbeitbarkeit bei diesem Beton liegt bei ungefähr 30 cm Ausbreitmass. Ohne Polyalkylenglykol ist der Beton nach 60 Minuten nur noch knapp bearbeitbar, während der Beton mit MPEG5000 nach 60 Minuten noch gut verarbeitbar ist. Zusätzlich ist aus der Druckfestigkeit nach einem Tag bei 10°C zu sehen, dass durch die Zugabe von Polyalkylenglykol keine Festigkeitseinbusse des Betons einhergeht.

**Tabelle 6: Ausbreitmass (ABM) in cm; h = Stunde; Luft = Luftporengehalt in %; n.d. = nicht gemessen**

| Nr | Polymer **A** | Polyalkylen glykol | ABM 0h | ABM 1h | ABM 3h | ABM 4h | ABM 6h | Luft 0h |
|---|---|---|---|---|---|---|---|---|
| 28 | 0.48 % ***A-3*** | - | 65 | 58 | 48 | 38 | n.d. | 1.7 |
| 29 | 0.48 % ***A-3*** | 0.08% MPEG3000 | 64 | 59 | 54 | n.d. | n.d. | 1.2 |
| 30 | 0.48 % ***A-3*** | 0.2% MPEG3000 | 65 | 60 | 57 | n.d. | n.d. | 2.6 |
| 31 | 0.48 % ***A-3*** | 0.08% MPEG5000 | 66 | 62 | 58 | n.d. | n.d. | 2.6 |
| 32 | 0.48 % ***A-3*** | 0.2% MPEG5000 | 65 | 63 | 60 | 50 | 38 | 2.4 |

Aus Tabelle 6 ist ersichtlich, dass die Verarbeitbarkeit des Betons, welcher ein erfindungsgemässes Polyalkylenglykol enthält, auch nach 3 Stunden noch sehr gut ist, verglichen mit dem Beton, welcher nur einen Verflüssiger enthält. Die Grenze der Verarbeitbarkeit ist erreicht, wenn das Ausbreitmass des Betons dieser Zusammensetzung unter 40 cm fällt. Beim Beton ohne Polylakylenglykol ist dieser Wert nach etwa 4 Stunden erreicht, beim Beton mit Polyalkylenglykol erst nach etwa 6 Stunden. Hervorragende Ergebnisse wurden mit MPEG5000 erzielt. Hier wird somit gezeigt, dass sich die Verarbeitungszeit eines Betons, welchem bei der Herstellung eine Zusammensetzung umfassend ein Verflüssiger mit Polymer A und ein Polyalkylenglykol zugegeben wurde, um etwa 50% verlängert, verglichen mit einem Beton, welchem bei der Herstellung nur ein Verflüssiger mit Polymer A zugegeben wurde.

### 3. Vergleich der Abbindezeiten

Es wurde ein Beton mit einer Korngrösse von 0-32 mm, mit ca. 320 kg/m³ Portlandzement CEM I 42.5, und einem w/z-Wert von 0.43 hergestellt. Bei der Zugabe des Anmachwassers wurden gleichzeitig ein Polymere **A** sowie ein Polyalkylenglykol oder ein Natriumgluconat in der in Tabelle 7 angegebenen Menge dazugegeben. Die Prozentangaben beziehen sich jeweils auf das Trockengewicht der Polymere **A** bzw. des Polyalkylenglykols oder des Natriumgluconats bezogen auf den Zement. Die Polymere **A** sowie das Polyalkylenglykol oder das Natriumgluconat wurden vor der Zugabe in Wasser gelöst und als 40%-ige Lösung mit dem Anmachwasser zur Betonmischung gegeben.

Es wurden die Abbindezeiten gemessen indem das Temperaturmaximum (Tₘₐₓ) der Betonmischungen bestimmt wurde. Die Abbindezeiten von Betonmischungen mit der erfindungsgemässen Zusammensetzung wurden mit den Abbindezeiten von Betonmischungen mit herkömmlichen Verzögerern wie Natriumgluconat oder Stärkederivaten verglichen. Aus Tabelle 7 ist ersichtlich, dass sich die Abbindezeiten von Betonmischungen mit herkömmlichen Verzögerern verlängern gegenüber Betonmischungen nur mit Verflüssiger, während die Abbindezeiten von Betonmischungen mit Verflüssigern und Polyalkylenglykolen mit denen ohne Polyalkylenglykol vergleichbar sind.

**Tabelle 7: Abbindezeiten in Stunden (h)**

| Nr | Polymer **A** | Polyalkylen Glykol oder Verzögerer | Abbindezeit (Tₘₐₓ) |
|---|---|---|---|
| 33 | 0.4 % ***A-3*** | - | 16h |
| 34 | 0.4 % ***A-3*** | 0.2% MPEG5000 | 16h |
| 35 | 0.4 % ***A-3*** | 0.05% Natriumgluconat | 18h |
| 36 | 0.4 % ***A-3*** | 0.1% Natriumgluconat | 21h |

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Zusammensetzung umfassend mindestens ein substituiertes oder unsubstituiertes Polyalkylenglykol der Formel (I),
und mindestens einen Verflüssiger für eine hydraulisch abbindende Zusammensetzung;
wobei die Formel (I) lautet:
R¹¹-O-(R¹²-O)ₓ-(R¹³-O)_{y}-R¹⁴ (I)
wobei
R¹¹ = H oder C₁- bis C₂₀ -Alkyl,
R¹² = C₂- bis C₄-Alkylen,
R¹³ = C₂- bis C₄-Alkylen,
R¹⁴ = H oder C₁- bis C₂₀ -Alkyl,
x = 0-500, und
y = 0-500 ist,
und wobei x+y > 20 und das Molgewicht M_{w} des Polyalkylenglykols der Formel (I) 1'000 bis 50'000 g/mol ist;
und wobei der Verflüssiger mindestens ein Polymer **A** der Formel (II) umfasst oder daraus besteht 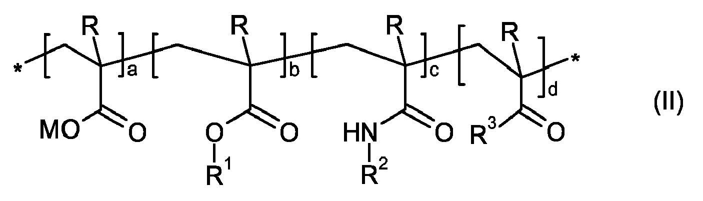 wobei
M = unabhängig voneinander H⁺, Alkalimetallion, Erdalkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl oder -[AO]ₙ-R⁴ darstellen,
wobei A = C₂- bis C₄-Alkylen, R⁴ = C₁- bis C₂₀ -Alkyl, Cyclohexyl oder Alkylaryl darstellt, und n = 2 - 250,
R³ = -NH₂, -NR⁵R⁶, -OR⁷NR⁸R⁹,
wobei R⁵ und R⁶ unabhängig voneinander H oder eine C₁- bis C₂₀- Alkyl-, Cycloalkyl- oder Alkylaryl- oder Arylgruppe ist;
oder eine Hydroxyalkylgruppe ist,
oder eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) ist,
oder R⁵ und R⁶ zusammen einen Ring bilden,
von dem der Stickstoff des -NR⁵R⁶ ein Teil ist, um einen Morpholin- oder Imidazolinring aufbauen,
wobei R⁷ eine C₂-C₄- Alkylengruppe ist,
und R⁸ und R⁹ unabhängig voneinander eine C₁- bis C₂₀- Alkyl-,
Cycloalkyl-, Alkylaryl-, Aryl- oder eine Hydroxyalkylgruppe ist,
und wobei a, b, c und d Molverhältnisse darstellen und
a/b/c/d = (0.05 - 0.9) / (0.05 - 0.95) / (0 - 0.8) / (0 - 0.5),
und a+b+c+d=1 ist.

2. Zusammensetzung gemäss Anspruch 1, **dadurch gekennzeichnet, dass** n = 8 - 200, besonders bevorzugt n = 11 - 150, ist.

3. Zusammensetzung gemäss Anspruch 1 oder 2, **dadurch gekennzeichnet, dass**
a/b/c/d = (0.1 - 0.9) / (0.1 - 0.9) / (0 - 0.5) / (0 - 0.1), bevorzugt
a/b/c/d = (0.1 - 0.9) / (0.1 - 0.9) / (0 - 0.3) / (0 - 0.06), ist.

4. Zusammensetzung gemäss Anspruch 3, **dadurch gekennzeichnet, dass** c+d > 0 ist.

5. Zusammensetzung gemäss einem der vorhergehenden Ansprüche, **dadurch gekennzeichnet, dass** in der Formel (I) R¹² gleich R¹³ ist.

6. Zusammensetzung gemäss einem der vorhergehenden Ansprüche, **dadurch gekennzeichnet, dass** das Polyalkylenglykol der Formel (I) ein Polyethylenglykol (PEG), Methoxypolyethylenglykol (MPEG) oder ein Polypropylenglykol (PPG), vorzugsweise ein Polyethylenglykol (PEG), ist.

7. Zusammensetzung gemäss einem der vorhergehenden Ansprüche, **dadurch gekennzeichnet, dass** das Molgewicht M_{w} des Polyalkylenglykols 2'000 bis 20'000 g/mol, bevorzugt 3'000 bis 10'000 g/mol, noch mehr bevorzugt 4'000 bis 6'000 g/mol, beträgt.

8. Zusammensetzung gemäss einem der vorhergehenden Ansprüche, **dadurch gekennzeichnet, dass** die Zusammensetzung eine Dispersion, eine Lösung oder ein Pulver ist.

9. Zusammensetzung gemäss einem der Ansprüche 1 bis 7, **dadurch gekennzeichnet, dass** die Zusammensetzung eine wässrige Lösung ist.

10. Zusammensetzung gemäss einem der vorhergehenden Ansprüche, **dadurch gekennzeichnet, dass** die Zusammensetzung zusätzlich weitere Zusatzstoffe, vorzugsweise ein organisches Lösungsmittel oder Wasser enthält.

11. Zusammensetzung gemäss einem der vorhergehenden Ansprüche, **dadurch gekennzeichnet, dass** der Anteil des Polyalkylenglykols 1 bis 70 Gew.-%, vorzugsweise 10 bis 50 Gew.-%, besonders bevorzugt 15 bis 40 Gew.-%, bezogen auf das Gesamtgewicht der Zusammensetzung, beträgt.

12. Zusammensetzung gemäss einem der vorhergehenden Ansprüche, **dadurch gekennzeichnet, dass** der Anteil des mindestens einen Verflüssigers 10 bis 99 Gew.-%, bevorzugt 50 bis 95 Gew.-%, noch mehr bevorzugt 60 bis 85 Gew.-%, bezogen auf das Gesamtgewicht der Zusammensetzung, beträgt.

13. Hydraulisch abbindende Zusammensetzung umfassend eine Zusammensetzung gemäss einem der Ansprüche 1 bis 12 sowie mindestens ein hydraulisch abbindendes Bindemittel.

14. Mit Wasser ausgehärtete hydraulische Zusammensetzung umfassend eine Zusammensetzung gemäss einem der Ansprüche 1 bis 12.

15. Verwendung einer Zusammensetzung gemäss einem der Ansprüche 1 bis 12 zur Verlängerung der Verarbeitungszeit einer hydraulisch abbindenden Zusammensetzung.

16. Verwendung gemäss Anspruch 15, **dadurch gekennzeichnet, dass** die Verarbeitungszeit um mehr als 10%, bevorzugt um 20 bis 70%, noch mehr bevorzugt um 25 bis 50% verlängert wird, verglichen mit der üblichen Verarbeitungszeit von hydraulisch abbindenden Zusammensetzungen umfassend einen Verflüssiger ohne ein Polyalkylenglykol der Formel (I).

17. Verfahren zur Herstellung einer Zusammensetzung gemäss einem der Ansprüche 1 bis 14, umfassend den Schritt
a) Mischen des Polyalkylenglykols der Formel (I) mit mindestens einem Verflüssiger umfassend oder bestehend aus mindestens einem Polymer **A** der Formel (II).

18. Betonkonstruktion umfassend eine Zusammensetzung gemäss einem der Ansprüche 1 bis 14.

19. Betonkonstruktion nach Anspruch 18, **dadurch gekennzeichnet, dass** die Betonkonstruktion ein Bauwerk des Hoch- oder Tiefbaus ist, insbesondere ein Gebäude, eine Strasse, eine Brücke oder ein Tunnel ist.
